## Europäisches Patentamt
## European Patent Office
## Office européen des brevets

(19)

(11) Numéro de publication: **0 015 181**
**B1**

(12) **FASCICULE DE BREVET EUROPEEN**

(45) Date de publication du fascicule du brevet:
**04.04.84**

(51) Int. Cl.³: **B 29 D 11/00**, B 29 C 1/04

(21) Numéro de dépôt: **80400165.9**

(22) Date de dépôt: **04.02.80**

(54) **Procédé pour le moulage d'articles en matière synthétique.**

(30) Priorité: **20.02.79 FR 7904308**

(43) Date de publication de la demande:
**03.09.80 Bulletin 80/18**

(45) Mention de la délivrance du brevet:
**04.04.84 Bulletin 84/14**

(84) Etats contractants désignés:
**DE GB IT**

(56) Documents cités:
**FR - A - 1 365 803**
**FR - A - 2 023 413**
**US - A - 2 279 859**
**US - A - 3 210 448**

(73) Titulaire: **ESSILOR INTERNATIONAL Cie Générale d'Optique, 1 Rue Thomas Edison Echat 902, F-94028 Creteil Cedex (FR)**

(72) Inventeur: **Blandin, Denis, 11 Allée des Alpes, F-94350 Villiers-sur-Marne (FR)**

(74) Mandataire: **CABINET BONNET-THIRION et al, 95 Boulevard Beaumarchais, F-75003 Paris (FR)**

BUNDESDRUCKEREI BERLIN

Procédé pour le moulage d'articles en matière synthétique

La présente invention concerne d'une manière générale le moulage d'articles en matière synthétique nécessitant pour sa prise un traitement thermique et objet d'un retrait non négligeable, et elle vise plus particulièrement le moulage de lentilles ophtalmiques en matière organique.

Ainsi qu'on le sait, un tel moulage se pratique usuellement dans un moule dont la cavité de moulage est définie par trois éléments de paroi de moulage distincts, à savoir un joint annulaire, et, de part et d'autre de celui-ci, d'une part une coquille de moulage à surface de moulage concave, et d'autre part une coquille de moulage à surface de moulage convexe.

Ainsi qu'on le sait également, les matières organiques les plus communément mises en oeuvre pour le moulage de lentilles ophtalmiques nécessitent pour leur prise, qui correspond à une polymérisation, un échauffement, et, au cours de cette prise, il se produit un retrait non négligeable de la matière.

Les éléments de paroi constitutifs du moule mis en oeuvre doivent être en mesure de suivre un tel retrait, et, en particulier, les coquilles de moulage sont usuellement dans ce but des coquilles à faces globalement parallèles d'épaisseur relativement réduite, et réalisées en verre, et, le plus souvent, en verre trempé.

Mais, à raison de ce retrait, il se développe entre les coquilles de moulage, lors de la prise de la matière moulée, des contraintes non négligeables pouvant entraîner un démoulage prématuré de l'une au moins quelconque de ces coquilles de moulage, au préjudice de celle-ci et de la lentille ophtalmique en cours de moulage.

En pratique, dans le cas, particulièrement délicat, où la lentille ophtalmique à mouler est une lentille du type dit »exécutive«, c'est-à-dire du type présentant sur sa surface convexe au moins une arête, délimitant deux zones de courbures différentes, c'est la coquille à surface de moulage concave correspondante qui est le plus souvent l'objet d'un démoulage prématuré.

Ce démoulage prématuré, et non contrôlé, conduit à une lentille ophtalmique présentant des défauts nécessitant son élimination, dus à une polymérisation incorrecte.

En outre, ce démoulage prématuré s'accompagne le plus souvent d'un endommagement non seulement de l'arête que doit présenter la lentille à mouler, mais encore de l'arête correspondante de la coquille de moulage à surface de moulage concave objet de ce démoulage prématuré.

La présente invention a d'une manière générale pour objet une disposition permettant d'éviter un tel démoulage prématuré non contrôlé.

De manière plus précise, elle a tout d'abord pour objet un procédé pour le moulage d'articles en matière synthétique nécessitant pour sa prise par polymérisation un traitement thermique et objet d'un retrait non négligeable au cours de celle-ci, du genre suivant lequel on introduit de ladite matière dans la cavité de moulage d'un moule dont ladite cavité de moulage est définie par au moins deux éléments de paroi de moulage distincts l'un de l'autre, caractérisé en ce que, on met en oeuvre un moule dont l'un seulement des éléments de paroi de moulage, dit ci-après par commodité élément de paroi transformable du fait du changement d'état de la matière le constituant, est au moins en partie, à compter de sa surface dans la cavité de moulage, dite ci-après surface de moulage, et transversalement vis-à-vis de cette surface, en matériau thermofusible à point de goutte ou point de ramollissement compris dans l'intervalle de températures correspondant au traitement thermique à appliquer à la matière concernée, en sorte qu'il en résulte un démoulage prématuré contrôlé de ladite matière vis-à-vis dudit élément de paroi de moulage, et que, suite au retrait de l'article dans le moule, il en résulte également un démoulage prématuré de ladite matière vis-à-vis d'un autre au moins des autres éléments de paroi de moulage; elle a encore pour objet un moule présentant un tel élément de transformable. transormable.

Cet élément de paroi transformable peut être en matériau thermofusible dans sa totalité.

Mais de préférence, seule une partie de cet élément de paroi transformable est en matériau thermofusible, ledit élément de paroi transformable présentant en surface une pellicule transformable, qui est en un tel matériau, et qui définit tout ou partie de sa surface de moulage, soit que cette pellicule soit formée par un revêtement appliqué in situ, soit qu'il s'agisse d'un film autonome convenablement rapporté.

Quoi qu'il en soit, le matériau constitutif de l'élément de paroi transformable suivant l'invention est capable d'une transformation s'accompagnant d'une modification de caractéristiques physiques, assimilable à un changement d'état, qu'il s'agisse d'un passage de l'état solide à l'état liquide par exemple, ou qu'il s'agisse d'un simple ramollissement.

Ainsi donc, lorsque, au cours du traitement thermique concerné, la température atteint la température de changement d'état de l'élément de paroi transformable suivant l'invention, la partie au moins de celui-ci définissant sa surface de moulage vient à se modifier, et par exemple elle vient à s'éliminer par fusion, ce qui déconnecte cet élément de paroi transformable de cavité de moulage, ou, autrement dit, assure un démoulage de celui-ci.

Il s'agit, bien entendu, d'un démoulage prématuré vis-à-vis de l'ensemble du processus de moulage.

Mais, suivant l'invention, ce démoulage prématuré se produit à un instant bien déterminé, qui correspond au moment où la température atteint celle du changement d'état de l'élément de paroi transformable concerné, qui est parfaitement connu, et peut être choisi en conséquence.

En effet, la présente invention est fondée sur l'observation que, dans le processus de moulage, qui a pour double effet d'une part de conférer une forme donnée à la matière moulée, et d'autre part de mettre celle-ci à l'abri de l'air au cours de son moulage pour en éviter une inhibition de prise, il est possible de provoquer un démoulage prématuré sans préjudice pour les qualités finales de la matière moulée, si ce démoulage prématuré intervient à un instant donné bien déterminé du processus thermique de prise correspondant.

C'est le cas suivant l'invention, puisque le démoulage prématuré de l'élément de paroi transformable intervient à une température bien déterminée.

Autrement dit, le démoulage prématuré suivant l'invention est parfaitement contrôlé par cette température.

En pratique, s'agissant du moulage d'une lentille ophtalmique, c'est de préférence la coquille de moulage à surface de moulage convexe qui est choisie pour constituer l'élément de paroi transformable.

Lors du démoulage prématuré de celle-ci, il se produit avantageusement une libération générale des contraintes se développant dans la cavité de moulage à raison du retrait de la matière moulée, ce qui ménage la coquille de moulage à surface de moulage concave, en permettant un dégagement de celle-ci vis-à-vis de la surface convexe de la lentille en cours de moulage, déjà prépolymérisée, l'étanchéité de la cavité de moulage définie par les coquilles de moulage et le joint intermédiaire entre celles-ci étant cependant maintenue jusqu'à terminaison du processus général de moulage, afin d'éviter toute inhibition de polymérisation de ladite lentille déjà polymérisée.

Dès lors, cette coquille de moulage à surface de moulage concave n'est l'objet d'aucune détérioration, et les lentilles ophtalmiques obtenues ne présentent aucun défaut susceptible d'en nécessiter l'élimination.

Certes, dans le brevet des Etats-Unis d'Amérique No 3 210 448, qui vise très spécifiquement le moulage de mousse de polyuréthane, il a été proposé de revêtir d'un matériau thermofusible les parois du moule mis en oeuvre, pour éviter qu'une telle mousse y adhère.

Mais cela implique nécessairement que le matériau thermofusible ainsi mis en oeuvre soit appliqué sur la totalité de la surface du moule, à peine de voir la mousse de polyuréthane moulée adhérer à la portion de cette surface éventuellement dépourvue d'un tel matériau thermofusible.

Cela emplique également que le démoulage de la mousse de polyuréthane ainsi moulée soit impérativement effectué à une température supérieure à la température de fusion du matériau thermofusible mis en oeuvre.

Il s'agit donc d'un procédé totalement différent, tant dans son but que dans son exécution, de celui objet de la présente demande.

Il en est de même en ce qui concerne le procédé décrit dans le brevet des Etats-Unis d'Amérique No 2 279 859, suivant lequel, s'agissant d'un article à vulcaniser ou mouler, il est proposé la mise en oeuvre d'un agent de démoulage, qui venant à se décomposer à la température de vulcanisation ou de moulage, conduit à la formation d'un coussin de gaz inerte propre normalement à faciliter le retrait dudit article de son moule; il s'agit en pratique d'un agent de démoulage carbonaté donnant naissance à du gaz carbonique.

Comme précédemment, l'agent de démoulage ainsi mis en oeuvre doit nécessairement être appliqué sur la totalité de la surface du moule.

De plus, outre que le processus de dégagement gazeux impliqué ne constitue pas un changement d'état au sens de la présente demande, une partie de l'agent de démoulage mis en oeuvre restant normalement sous forme solide, il est en pratique incertain et mal contrôlé.

De plus, il nécessite des températures relativement élevées, supérieures en tous cas à 100°C, qui peuvent être incompatibles avec le moulage de certaines matières, comme c'est le cas pour les matières organiques usuellement mises en oeuvre pour le moulage de lentilles ophtalmiques.

Ces inconvénients se trouvent avantageusement écartés avec la mise en oeuvre, suivant l'invention, d'un matériau thermofusible pour la constitution d'un élément de paroi transformable.

Les caractéristiques et avantages de l'invention ressortiront d'ailleurs de la description qui va suivre, à titre d'exemple, en référence aux dessins schématiques annexés sur lesquels:

la figure 1 est une vue en coupe axiale éclatée d'un moule à élément de paroi de moulage transformable suivant l'invention;

les figures 2A, 2B, 2C, 2D, 2E et 2F sont, à échelle différente, des vues analogues à celle de la figure 1, moule fermé, et illustrent diverses phases successives de mise en oeuvre de ce moule;

les figures 3A, 3B, 3C sont des vues en coupe axiale schématique illustrant diverses phases de formation possible pour l'élément de paroi de moulage transformable équipant le moule suivant l'invention.

Ces figures illustrent, à titre d'exemple, l'application de l'invention au moulage d'une lentille ophtalmique en matière organique, et plus précisément au moulage d'une lentille ophtalmique, dite »exécutive«, présentant, sur sa face convexe, une arête vive.

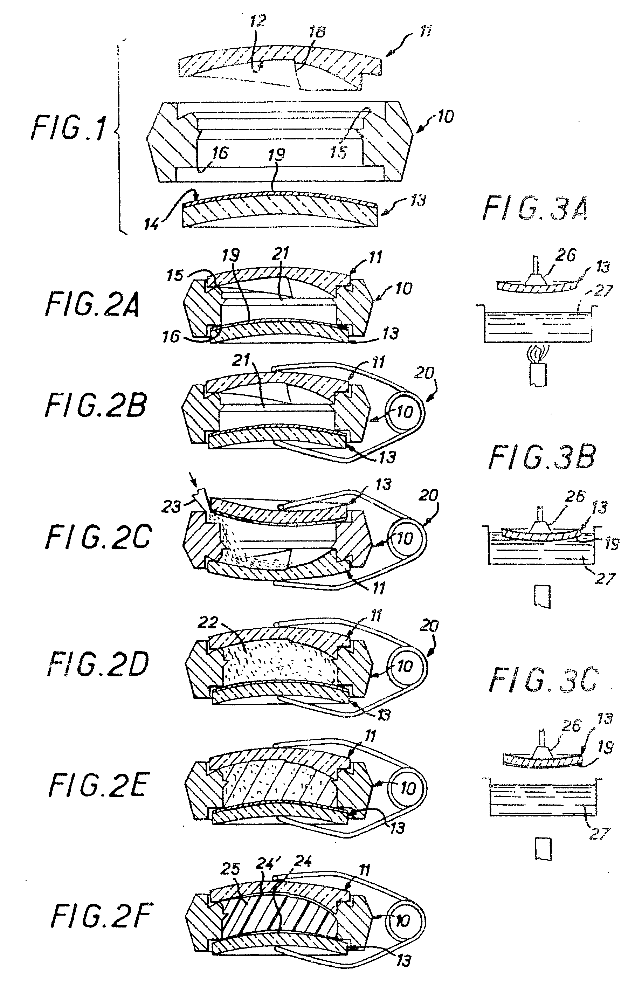

De manière connue en soi, en tel moulage se pratique à l'aide d'un moule formé de trois éléments de paroi de moulage distincts, à savoir, figure 1, un joint annulaire 10, et, de part et d'autre de celui-ci, d'une part une coquille de moulage 11, à surface de moulage 12 concave, et d'autre part, une coquille de moulage 13, à surface de moulage 14 convexe.

Le joint annulaire 10 est usuellement en matière élastique, et par exemple en élastomère de synthèse.

Sa structure est bien connue par elle-même, et elle ne fait pas partie de la présente invention; elle ne sera donc pas décrite ici en détail.

Il suffira de préciser que, pour appui de la coquille de moulage 11, il présente une arête annulaire 15, et que, pour appui de la coquille de moulage 13, il présente une arête de moulage 16.

Les coquilles de moulage 11, 13 sont usuellement en verre minéral, et par exemple, au moins pur la coquille de moulage 11, en verre minéral trempé.

Il s'agit, dans l'exemple de réalisation représenté, de coquilles à faces globalement parallèles, en ce sens que leur surface opposée à leur surface de moulage suit globalement le contour de celle-ci, et est donc convexe lorsqu'il s'agit d'une surface de moulage concave, et concave lorsqu'il s'agit d'une surface de moulage convexe.

En outre, elles sont d'épaisseur relativement réduite, de l'ordre de 4 à 10 mm par exemple.

Mais ces dispositions ne font pas partie de la présente invention, et ne sont donc en rien limitatives de celle-ci.

Dans l'exemple de réalisation représenté, et s'agissant d'une lentille ophtalmique »exécutive«, la coquille de moulage 11 présente, au travers de sa surface de moulage 12, une arête vive 18, qui y délimite deux zones de courbures distinctes.

Le moule ainsi constitué est propre au moulage d'une quelconque matière organique.

S'agissant de l'obtention d'une lentille ophtalmique, une telle matière organique est le plus souvent constituée de polyéthylène glycol di-allyle di-carbonate, susceptible de prise par polymérisation.

Cette matière, qui est usuellement vendue sous la désignation commerciale »CR 39«, nécessite pour sa prise l'adjonction d'un catalyseur et l'application d'un traitement thermique d'échauffement.

En pratique, avec un catalyseur tel que le percarbonate d'isopropyle, il faut lui appliquer un traitement thermique pendant 18 à 20 heures, allant d'une température initiale de 40°C à une température finale de 90°C.

Suivant l'invention, la coquille de moulage 13 mise en oeuvre constitue un élément de paroi transformable, cette coquille de moulage 13 étant, au moins en partie, à compter de sa surface de moulage 14, et transversalement vis-à-vis de cette surface, en matériau thermofusible à point de goutte, ou point de ramollissement, compris dans l'intervalle de températures concerné, soit la température ambiante d'une part, et 90°C, ou plus, suivant le catalyseur employé d'autre part.

Ainsi qu'on le sait, le point de goutte est défini par la température pour laquelle il y a un passage de l'état solide à l'état liquide pour le matériau thermofusible concerné; le point de ramollissement est défini de manière semblable par un passage de l'état solide à l'état pâteux.

Il s'agit, en pratique, dans l'un et l'autre cas d'un changement d'état ou d'une transformation assimilable à un tel changement d'état.

Le matériau thermofusible mis en oeuvre peut par exemple être constitué par une paraffine, qui a un point de goutte de l'ordre de 60 à 62°C, compris donc dans l'intervalle de températures correspondant au traitement thermique à appliquer pour sa prise à un polyéthylène glycol di-allyle di-carbonate catalysé avec 3% de percarbonate d'isopropyle.

Dans l'exemple de réalisation représenté, seule une partie de la coquille de moulage 13 est en matériau thermofusible, cette coquille de moulage 13 présentant en surface, une pellicule transformable 19, qui est par exemple en paraffine, tel que proposé ci-dessus, et qui en définit la surface de moulage 14; le substrat restant est en verre minéral, comme mentionné ci-dessus, et en pratique en verre non trempé; de préférence il est dépoli en surface, pour un bon accrochage de la paraffine.

Pour la mise en oeuvre du moule suivant l'invention, les coquilles de moulage 11, 13 sont assemblées au joint annulaire 10, figure 2A, et, de manière connue en soi, elles sont maintenues en application contre les arêtes 15, 16 de ce joint par une pince élastique 20, figure 2B.

Une telle pince ne fait pas partie de la présente invention, et elle ne sera donc pas décrite en détail ici.

Quoi qu'il en soit, les coquilles de moulage 11, 13 étant ainsi assemblées au joint annulaire 10, elles définissent, conjointement avec celui-ci, une cavité de moulage 21, par la partie de leur surface de moulage 12, 14 qui se trouve à l'intérieur du contour de l'arête 15, 16 correspondante de ce joint.

Pour le remplissage de la cavité de moulage 21 par de la matière à mouler à l'aide d'une buse d'injection 23, l'une des coquilles de moulage 11, 13 est légèrement écartée du joint annulaire 10, et, tel que schématisé à la figure 2C, il s'agit le plus souvent de la coquille de moulage à surface de moulage convexe.

Après remplissage, et après avoir en général replacé la coquille de moulage à surface de moulage convexe de préférence vers le bas, figure 2D, le moule par exemple est placé dans une étuve à 40°C, et il y est laissé pendant 4 à 6 heures, le temps nécessaire à une prépolymérisation de la masse à mouler 22 qu'il contient.

La température est ensuite progressivement poussée à 90°C, pendant environ 12 heures, pour obtention de la polymérisation finale recherchée pour la masse moulée 22.

Mais, suivant l'invention, au cours de ce séjour, et dès que la température atteint le point de goutte ou point de ramollissement de la pellicule transformable 19 que la coquille de moulage 13 présente en surface dans la cavité de moulage 21, il se produit un changement d'état de cette pellicule transformable 19, soit par fusion, soit par ramollissement, conduisant à une séparation de la coquille de moulage 13 vis-à-vis de la masse moulée déjà prépolymérisée.

Par suite, il apparaît un jour 24 entre la coquille de moulage 13 et cette masse moulée déjà polymérisée 25, figure 2F.

Autrement dit, il y a, suivant l'invention, un démoulage prématuré, systématique, et contrôlé, de la coquille de moulage 13, au cours du processus de polymérisation de la masse moulée.

Presque simultanément, par la libération générale qui en résulte pour les contraintes s'étant développées préalablement en raison du retrait de la matière de la masse moulée, retrait qui à ce moment là est de l'ordre de 5%, la coquille de moulage 11, la plus délicate en raison de la présence de l'arête vive 18, se sépare elle aussi de la masse moulée prépolymérisée 25, et s'en trouve avantageusement ménagée.

Un jour 24' apparaît donc ainsi entre la coquille de moulage 11 et la masse moulée prépolymérisée 25.

Une fois la polymérisation achevée, on procède, de manière usuelle, au retrait de la pince élastique 20, puis, dans l'ordre, de la coquille de moulage à surface de moulage concave 11, et de la coquille de moulage à surface de moulage convexe 13; il ne reste ensuite qu'à désolidariser le joint annulaire 10 de la lentille obtenue.

Ces diverses opérations peuvent se faire soit à température tempérée, soit à froid.

Les figures 3A, 3B, 3C illustrent à titre d'exemple un processus possible pour l'obtention d'une pellicule transformable 19 à la surface de la coquille de moulage 13.

Suivant ce processus, cette pellicule transformable 19 est formée par un revêtement appliqué in situ sur la coquille de moulage 13, et on s'y prend comme suit: une ventouse 26, ou un autre moyen de préhension approprié, étant rapporté sur la coquille de moulage 13 pour en faciliter la manipulation, cette coquille de moulage 13 est présentée froide, par sa surface convexe à revêtir, au-dessus d'un pain 27 du matériau thermofusible à mettre en oeuvre, de la paraffine dans l'exemple considéré, ce bain étant maintenu à l'état liquide par chauffage à une température supérieure à celle du point de goutte, figure 3A.

La coquille de moulage 13 est alors trempée dans le bain 27, figure 3B, et au contact de la paroi froide de cette coquille, la partie correspondante de ce bain se fige et forme sur celle-ci la pellicule transformable 19 recherchée; la coquille de moulage 13 est alors rapidement retirée du bain 27, figure 3C, dès qu'elle est ainsi recouverte complètement d'une pellicule de paraffine, pour éviter que celle-ci ne redevienne liquide en raison du chauffage par conduction dont est inévitablement l'objet cette coquille de moulage 13 au sein du bain 27.

Il va de soi que d'autres processus peuvent être envisagés pour la réalisation de la pellicule transformable 19 recherchée.

Celle-ci pourrait par exemple être formée par enduction, centrifugation, ou dépôt à l'aide d'applicateurs thermostatés.

Elle pourrait également être formée par un film autonome rapporté sur la coquille de moulage 13.

En outre, d'autres matières que la paraffine peuvent convenir pour l'obtention d'une telle pellicule transformable.

Il pourrait par exemple s'agir de cire, ou de compositions à base de paraffine, et/ou de cire et/ou de polymères thermofusibles, sélectionnés suivant la température désirée de démoulage contrôlé, cette température tenant compte du monomère à polymériser, du catalyseur de polymérisation mis en oeuvre, et du cycle de polymérisation correspondant.

Mais il pourrait également s'agir d'un métal ou d'un alliage thermofusible, et notamment de l'alliage connu sous le nom de alliage de WOOD, à base de plomb et d'étain, dont le point de goutte se situe entre 60 et 65° C.

En pratique, une très faible épaisseur de pellicule transformable suffit à l'obtention de l'effet de démoulage recherché.

Cette épaisseur peut ainsi être comprise entre quelques centièmes et quelques dixièmes de millimètres.

D'ailleurs, en variante, la totalité de la coquille de moulage 13 peut être constituée, si désiré, en matériau thermofusible, cette coquille de moulage constituant alors un élément de paroi de moulage perdu, ou régénérable par récupération de sa matière après fusion, qui est totale.

En outre, la présente invention ne se limte pas au mode de mise en oeuvre plus particulièrement décrit et représenté.

En particulier, ce n'est pas nécessairement la coquille de moulage à surface de moulage convexe qui comporte un tel élément de paroi transformable; il pourrait s'agir aussi bien de la coquille de moulage à surface de moulage concave.

Seule une partie d'une telle surface de moulage peut ainsi être rendue transformable; s'agissant du moulage de lentilles ophtalmiques du type »exécutive«, seule l'une ou l'autre des deux zones que délimite sur sa surface de moulage l'arête vive que comporte la coquille de moulage à surface de moulage concave peut être dotée d'un élément de paroi transformable; en variante, un tel élément de paroi transformable peut être formé en anneau sur une quelconque coquille de moulage, pour permettre un contrôle optique de la zone centrale utile des lentilles semi-finies obtenues.

Par ailleurs, bien que convenant tout particulièrement au moulage de lentilles ophtalmiques, du type »exécutive«, en matière organique, le domaine d'application de l'invention n'est pas

limité à un tel moulage.

## Revendications

1. Procédé pour le moulage d'articles en matière synthétique nécessitant pour sa prise par polymérisation un traitement thermique et objet d'un retrait non négligeable au cours de celle-ci, du genre suivant lequel on introduit de ladite matière dans la cavité de moulage d'un moule dont ladite cavité de moulage est définie par au moins deux éléments de paroi de moulage distincts l'un de l'autre, caractérisé en ce que, on met en oeuvre un moule dont l'un seulement (13) des éléments de paroi de moulage (10, 11, 13), dit ci-après par commodité élément de paroi transformable du fait du changement d'état de la matière le constituant, est au moins en partie, à compter de sa surface (14) dans la cavité de moulage, dite ci-après surface de moulage, et transversalement vis-à-vis de cette surface, en matériau thermofusible à point de goutte ou point de ramollissement compris dans l'intervalle de températures correspondant au traitement thermique à appliquer à la matière concernée, en sorte qu'il en résulte un démoulage prématuré contrôlé de ladite matière vis-à-vis dudit élément de paroi de moulage (13), et que, suite au retrait de l'article dans le moule, il en résulte également un démoulage prématuré de ladite matière vis-à-vis d'un autre au moins (11) des autres éléments de paroi de moulage (10, 11).

2. Moule pour le moulage d'articles en matière synthétique nécessitant pour sa prise par polymérisation un traitement thermique et objet d'un retrait non négligeable au cours de celle-ci, du genre comportant une cavité de moulage définie par au moins deux éléments de paroi de moulage distincts, caractérisé en ce que l'un seulement (13) desdits éléments de paroi (10, 11, 13), dit ci-après élément de paroi transformable du fait du changement d'état de la matière le constituant, est, au moins en partie, à compter de sa surface (14) dans la cavité de moulage, dite ci-après surface de moulage, et transversalement vis-à-vis de cette surface de moulage, en matériau thermofusible à point de goutte ou point de ramollissement compris dans l'intervalle de températures correspondant au traitement thermique à appliquer, en sorte qu'il en résulte un démoulage prématuré contrôlé de ladite matière vis-à-vis tant dudit élément de paroi de moulage (13) que d'un autre au moins (11) des autres éléments de paroi de moulage (10, 11).

3. Moule suivant la revendication 2, caractérisé en ce que seule une partie de l'élément de paroi transformable (13) est en matériau thermofusible, ledit élément de paroi transformbale (13) présentant en surface une pellicule transformable (19), qui est en un tel matériau, et qui définit au moins pour partie sa surface de moulage (14).

4. Moule suivant la revendication 3, caractérisé en ce que ladite pellicule transformable est formée par un revêtement appliqué in situ sur l'élément de paroi transformable.

5. Moule suivant la revendication 3, caractérisé en ce que ladite pellicule transformable (19) est formée par un film autonome rapporté sur l'élément de paroi transformable (13).

6. Moule suivant l'une quelconque des revendications 2 à 5, du genre destiné au moulage de lentilles ophtalmiques en matière organique et comportant à cet effet, pour la définition de sa cavité de moulage, un joint annulaire (10), et, de part et d'autre de celui-ci, d'une part une coquille de moulage (11) à surface de moulage concave (12) et d'autre part une coquille de moulage (13) à surface de moulage convexe (14), caractérisé en ce que c'est la coquille de moulage (13) à surface de moulage convexe (14) qui en constitue l'élément de paroi transformable.

7. Moule suivant l'une quelconque des revendications 2 à 5, du genre destiné au moulage de lentilles ophtalmiques en matière organique et comportant à cet effet, pour la définition de sa cavité de moulage, un joint annulaire (10) et, de part et d'autre de celui-ci, d'une part une coquille de moulage (11) à surface de moulage concave (12) et d'autre part une coquille de moulage (13) à surface de moulage convexe (14), caractérisé en ce que c'est la coquille de moulage (11) à surface de moulage concave (12) qui en constitue l'élément de paroi transformable.

8. Moule suivant l'une quelconque des revendications 2 à 7, caractérisé en ce que le matériau thermofusible mis en oeuvre est de la paraffine.

## Patentansprüche

1. Verfahren zum Formgießen von Gegenständen aus einem Kunststoffmaterial, welches für seine Verfestigung durch Polymerisation eine Wärmebehandlung erfordert und Gegenstand einer nicht vernachlässigbaren Schrumpfung während dieser ist, bei welchem das Material in den Formhohlraum einer Gießform eingeführt wird, deren Formhohlraum durch zumindest zwei voneinander verschiedene Formwandelemente begrenzt ist, dadurch gekennzeichnet, daß eine Gießform verwendet wird, von der nur eines (13) der Formwandelemente (10, 11, 13), welches nachfolgend zur Vereinfachung umwandelbares Wandelement genannt wird wegen der Zustandsänderung des dieses bildenden Materials, wenigstens zum Teil, von seiner Oberfläche (14) in dem Formhohlraum, nachfolgend Formoberfläche genannt, und senkrecht zu dieser Oberfläche gerechnet, aus einem Material besteht, welches mit einem Tropfpunkt oder Erweichungspunkt wärmeschmelzbar ist, der in dem Temperaturintervall einbegriffen ist, welches der für das verwendete Material anzuwendenden Wärmebehandlung entspricht, und zwar derart, daß eine gesteuerte vorzeitige Entformung des Materials gegenüber diesem Formwandelement (13) erfolgt und daß infolge der Schrumpfung des Gegenstandes in der Form gleichfalls eine vorzeitige Entformung des Materials gegenüber zumindest einem anderen (11) der anderen Formwandelemente (10, 11) erfolgt.

2. Form für das Formgießen von Gegenständen aus einem Kunststoffmaterial, welches für seine Verfestigung durch Polymerisation eine Wärmebehandlung erfordert und Gegenstand einer nicht vernachlässigbaren Schrumpfung im Verlaufe von dieser ist, mit einem Formhohlraum, der durch wenigstens zwei verschiedene Formwandelemente begrenzt ist, dadurch gekennzeichnet, daß nur eines (13) der Wandelemente (10, 11, 13), nachfolgend umwandelbares Wandelement genannt wegen der Zustandsänderung des dieses bildenden Materials, zumindest zum Teil, von seiner Oberfläche (14) in dem Formhohlraum, nachfolgend Formoberfläche genannt, und senkrecht zu dieser Formoberfläche gerechnet, aus einem Material besteht, daß mit einem Tropfpunkt oder Erweichungspunkt wärmeschmelzbar ist, der in dem Temperaturintervall einbegriffen ist, welches der anzuwendenden Wärmebehandlung entspricht, und zwar derart, daß eine gesteuerte vorzeitige Entformung des Materials in bezug auf das Formwandelement (13) ebenso wie wenigstens auf ein weiteres (11) der anderen Formwandelemente (10, 11) erfolgt.

3. Form nach Anspruch 2, dadurch gekennzeichnet, daß nur ein Teil des umwandelbaren Wandelementes (13) aus wärmeschmelzbarem Material besteht, wobei das umwandelbare Wandelement (13) auf der Oberfläche eine umwandelbare Haut bzw. dünne Schicht (19) aufweist, die aus einem solchen Material besteht und die zumindest zum Teil seine Formoberfläche (14) begrenzt.

4. Form nach Anspruch 3, dadurch gekennzeichnet, daß die umwandelbare Haut durch einen Überzug gebildet ist, der an Ort und Stelle auf das umwandelbare Wandelement aufgebracht worden ist.

5. Form nach Anspruch 3, dadurch gekennzeichnet, daß die umwandelbare Haut (19) von einer autonomen Schicht gebildet ist, mit der das umwandelbare Wandelement (13) überzogen ist.

6. Form nach einem der Ansprüche 2—5, die für das Formgießen von Augengläsern aus organischem Material geeignet ist und zu diesem Zweck zur Begrenzung ihres Formhohlraumes einen Verbindungsring (10) und beiderseits von diesem einerseits eine Gießkokille (11) mit konkaver Gießoberfläche (12) und andererseits eine Gießkokolle (13) mit konvexer Gießoberfläche (14) umfaßt, dadurch gekennzeichnet, daß die Gießkokille (13) mit konvexer Gießoberfläche (14) auf dieser das umwandelbare Wandelement bildet.

7. Form nach einem der Ansprüche 2—5, die für das Formgießen von Augengläsern aus organischem Material geeignet ist und zu diesem Zweck zur Begrenzung ihres Formhohlraumes einen Verbindungsring (10) und beiderseits von diesem einerseits eine Gießkokille (11) mit konkaver Gießoberfläche (12) und andererseits eine Gießkokille (13) mit konvexer Gießoberfläche (14) umfaßt, dadurch gekennzeichnet, daß die Gießkokille (11) mit konkaver Gießoberfläche (12) auf dieser das umwandelbare Wandelement bildet.

8. Form nach einem der Ansprüche 2—7, dadurch gekennzeichnet, daß das verwendete wärmeschmelzbare Material Paraffin ist.

**Claims**

1. Process for moulding articles from a synthetic material which requires a heat treatment to cause it to set by polymerisation and suffers not insignificant shrinkage in the course thereof, the process being of the type according to which the said material is introduced into the moulding cavity of a mould of which the said moulding cavity is defined by at least two moulding wall elements which are distinct from one another, characterised in that a mould is employed of which only one (13) of the moulding wall elements (10, 11, 13), hereafter referred to for convenience as the transformable wall element, because of the change of state of the material of which it consists, is made at least partly, starting from its surface (14) in the moulding cavity, said surface being hereafter referred to as the moulding surface, and transversely with respect to this surface, of a heat-fusible material having a drop point or softening point within the temperature range corresponding to the heat treatment to be applied to the material concerned, so that there results a controlled premature demoulding of the said material with respect to the said moulding wall element (13) and that, following the shrinkage of the article in the mould, there also results a premature demoulding of the said material with respect to at least one other (11) of the remaining moulding wall elements (10, 11).

2. Mould for moulding articles from a synthetic material which requires a heat treatment to cause it to set by polymerisation and suffers not insignificant shrinkage in the course thereof, the process being of the type comprising a moulding cavity defined by at least two distinct moulding wall elements, characterised in that only one (13) of the said wall elements (10, 11, 13), hereafter referred to as the transformable wall element, because of the change of state of the material of which it consists, is made at least partly, starting from its surface (14) in the moulding cavity, said surface being hereafter referred to as the moulding surface, and transversely with respect to this moulding surface, of a heat-fusible material having a drop point or softening point within the temperature range corresponding to the heat treatment to be applied, so that there results a controlled premature demoulding of the said material with respect to both the said moulding wall element (13) and to at least one other (11) of the remaining moulding wall elements (10, 11).

3. Mould according to claim 2, characterised in that only one part of the transformable wall element (13) is made of a heat-fusible material, the said transformable wall element (13) having, at the surface, a transformable film (19) which is made of such a material and which defines, at least partly, its moulding surface (14).

4. Mould according to claim 3, characterised in that the said transformable film is formed by a coating applied in situ onto the transformable wall element.

5. Mould according to claim 3, characterised in that the said transformable film (19) consists of a self-supporting film attached to the transformable wall element (13).

6. Mould according to any one of claims 2 to 5, of the type intended for moulding opthalmic lenses from an organic material and comprising to this effect, for the purpose of defining its moulding cavity, an annular joint (10) and, on either side of the latter, on the one hand a moulding shell (11) having a concave moulding surface (12) and, on the other hand, a moulding shell (13) having a convex moulding surface (14), characterised in that the moulding shell (13) having a convex moulding surface (14) constitutes the transformable wall element.

7. Mould according to any one of claims 2 to 5, of the type intended for moulding opthalmic lenses from an organic material and comprising to this effect, for the purpose of defining its moulding cavity, an annular joint (10) and, on either side of the latter, on the one hand a moulding shell (11) having a concave moulding surface (12) and, on the other hand, a moulding shell (13) having a convex moulding surface (14), characterised in that the moulding shell (11) having a concave moulding surface (12) constitutes the transformable wall element.

8. Mould according to any one of claims 2 to 7, characterised in that the heat-fusible material employed is paraffin.

FIG.1

FIG.2A

FIG.2B

FIG.2C

FIG.2D

FIG.2E

FIG.2F

FIG.3A

FIG.3B

FIG.3C